(19) **Europäisches Patentamt**
**European Patent Office**
**Office européen des brevets**

(11) **EP 2 369 622 B1**

(12) **FASCICULE DE BREVET EUROPEEN**

(45) Date de publication et mention
de la délivrance du brevet:
**14.10.2015 Bulletin 2015/42**

(51) Int Cl.:
*H01L 23/58* (2006.01)　　*G06F 21/72* (2013.01)
*G06F 1/26* (2006.01)　　*G06K 19/073* (2006.01)
*H01L 23/00* (2006.01)　　*H01L 21/762* (2006.01)
*H04L 9/00* (2006.01)　　*H03K 3/84* (2006.01)
*H03K 19/003* (2006.01)

(21) Numéro de dépôt: **11157357.2**

(22) Date de dépôt: **08.03.2011**

(54) **Procédé et dispositif de contremesure contre une attaque par injection d'erreur dans un microcircuit électronique**

Verfahren und Vorrichtung für Gegenmassnahme gegenüber einem Angriff durch Fehlerinjektion in einem elektronischen Mikroschaltungskarte

Method and device of coutermeasure against a fault-injection error attack within an electronic microcircuit

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.03.2010 FR 1001177**
**24.03.2010 FR 1001176**

(43) Date de publication de la demande:
**28.09.2011 Bulletin 2011/39**

(73) Titulaire: **STMicroelectronics Rousset SAS**
**13790 Rousset (FR)**

(72) Inventeurs:
• **Marinet, Fabrice**
**13790, CHATEAUNEUF LE ROUGE (FR)**
• **Lisart, Mathieu**
**13100, AIX EN PROVENCE (FR)**

(74) Mandataire: **Casalonga, Axel**
**Casalonga & Partners**
**Bayerstrasse 71-73**
**80335 München (DE)**

(56) Documents cités:
**EP-A2- 2 109 139　　US-A1- 2003 133 241**
**US-A1- 2007 126 100　　US-A1- 2007 171 588**
**US-B1- 6 745 331**

• **HAGAI BAR-EL ET AL: "The Sorcerer's Apprentice Guide to Fault Attacks", [Online] 7 mai 2004 (2004-05-07), XP002329915, pages 1-13, Extrait de l'Internet: URL:http: //web.archive.org/web/20041016071 838/eprint.iacr.org/2004/100> [extrait le 2005-05-27] * le document en entier ***

Printed by Jouve, 75001 PARIS (FR)

**Description**

La présente invention concerne un procédé de contremesure pour protéger des données sensibles circulant dans un microcircuit électronique, contre des attaques visant à découvrir ces données. Elle concerne également un dispositif portable à microcircuit tel qu'une carte à puce, mettant en oeuvre le procédé.

Les données sensibles peuvent être notamment des clés de chiffrement ou de déchiffrement, et plus généralement des données cryptographiques utilisées ou élaborées lors de calculs cryptographiques, comme des données intermédiaires de tels calculs, et des identifiants qui doivent être conservés secrets.

Les dispositifs à microcircuit manipulant des données sensibles font parfois l'objet d'attaques visant à déterminer ces données. Parmi les attaques connues, les attaques de type SPA (Simple Power Analysis) ou DPA (Differential Power Analysis) consistent à effectuer de nombreuses mesures de courants et de tensions entrant et sortant dans le microcircuit lors de l'exécution d'un programme ou le traitement de données par le microcircuit, avec des données d'entrée différentes. Les mesures obtenues sont exploitées par une analyse statistique pour en déduire des données protégées, traitées ou utilisées par le microcircuit. Dans ce même but, les attaques de type EMA (Electromagnetic Analysis) et DEMA (Differential Electromagnetic Analysis) se basent sur l'analyse du rayonnement électromagnétique émis par le microcircuit.

On connaît également les attaques par injection de faute qui consistent à introduire des perturbations dans le microcircuit pendant qu'il exécute par exemple des algorithmes sensibles tels que des algorithmes cryptographiques, ou dans le but de déclencher l'exécution d'une routine de téléchargement émettant sur un port les données qu'il mémorise. Une telle perturbation peut être réalisée en appliquant au microcircuit un ou plusieurs éclairs brefs par exemple par un faisceau laser, ou un ou plusieurs pics de tension sur l'un de ses contacts.

Afin de lutter contre ces attaques variées par nature, de nombreuses solutions très différentes les unes des autres ont été apportées. L'invention concerne plus particulièrement celles qui visent à détecter des attaques par injection de faute.

Diverses techniques de détection ont été mises en oeuvre afin de lutter contre ces attaques. Ainsi, il est connu de dupliquer dans un microcircuit les circuits à protéger, et de comparer les données fournies par les circuits dupliqués. Si une différence apparaît dans les données fournies, cela signifie que le microcircuit a subi une attaque par injection de faute. Cette technique de détection apparaît couteuse en termes de taille de circuit et de consommation électrique.

Il est également connu d'insérer dans un microcircuit plusieurs détecteurs locaux réagissant à un flash lumineux en fournissant un signal de détection actif. Cette solution ne permet pas réellement de protéger les circuits sensibles du microcircuit d'une injection de faute, à moins de prévoir un grand nombre de détecteurs locaux, ce qui induit un surcoût important en termes de taille de circuit et de consommation électrique.

Le brevet US 6 745 331 décrit un circuit comprenant une unité de détection pour détecter des attaques par la tension d'alimentation du circuit. Cette unité de détection comprend un premier comparateur pour détecter lorsque la tension d'alimentation du circuit augmente et dépasse une certaine limite, et un second comparateur pour détecter lorsque cette tension diminue et dépasse une certaine limite.

La demande de brevet US 2007/171588 décrit un composant électronique comprenant un caisson dopé formé dans un substrat semiconducteur et des structures de transistor formées dans le caisson. Un circuit est connecté au caisson pour appliquer une tension au caisson à intervalles réguliers, et le laisser à un potentiel flottant le reste du temps. Le circuit détecte des écarts entre la tension fournie et la tension présente dans le caisson, et déclenche une alarme en cas de détection d'un écart spécifique.

La demande de brevet EP 2 109 139 décrit un dispositif de protection d'un circuit intégré contre des attaques par faisceau laser. Ce dispositif comprend des caissons dopés P en alternance avec des caissons dopés N, séparés par des tranchées isolantes, et formés au dessus d'un caisson enterré isolant. Les caissons dopés P sont polarisés par une région reliée à la masse, les caissons dopés N et les caissons enterrés sont polarisés par des régions dopées recevant la tension d'alimentation du circuit.

Il est souhaitable de mettre en oeuvre un dispositif de contremesure visant à protéger des circuits manipulant des données secrètes contre des attaques par injection de faute. Il est également souhaitable de pouvoir détecter une injection de faute notamment par l'application d'éclairs brefs ou de pics de tension sur le microcircuit. Il est également souhaitable que le dispositif de contremesure n'augmente pas de manière sensible la complexité ou la consommation électrique du microcircuit.

Des modes de réalisation concernent un procédé de détection d'une attaque d'un microcircuit électronique, comprenant des étapes consistant à : former le microcircuit dans un substrat, former dans le substrat un premier caisson électriquement isolé du substrat, par un second caisson et un caisson enterré, et former dans les premier et second caissons un circuit de traitement de donnée comprenant une borne de masse formée dans le premier caisson et une borne d'alimentation formée dans le second caisson. Selon un mode de réalisation, le procédé comprend des étapes consistant à : fournir à la borne de masse du circuit de traitement une tension supérieure à une tension fournie à une borne de masse du substrat, fournir à la borne d'alimentation du circuit de traitement une tension d'alimentation régulée à partir d'une tension d'alimentation reçue à une borne d'alimentation du microcircuit, et activer un signal de détection lorsqu'une différence de tension entre la borne de masse du circuit de traitement et la borne de masse du substrat, ou entre la borne d'alimentation du circuit de traitement et la tension régulée, franchit une tension de seuil.

Selon un mode de réalisation, le signal de détection est activé dès que la tension entre les bornes de masse du circuit de traitement et du substrat devient supérieure à la tension de seuil.

Selon un mode de réalisation, la tension de seuil est ajustée à une valeur supérieure à une plage de variation de la tension de masse à la borne de masse du circuit de traitement en fonctionnement normal.

Selon un mode de réalisation, le signal de détection est activé dès que la différence de tension entre la borne d'alimentation du circuit de traitement et la tension régulée devient inférieure à la tension de seuil.

Selon un mode de réalisation, la tension de seuil est ajustée à une valeur inférieure à une plage de variation de la tension à la borne d'alimentation du circuit de traitement en fonctionnement normal.

Selon un mode de réalisation, la borne de masse du circuit de traitement est reliée à la borne de masse du substrat par l'intermédiaire d'une résistance ou d'un circuit de polarisation fournissant une tension de polarisation à la borne de masse du circuit de traitement.

Selon un mode de réalisation, le procédé comprend des étapes de formation de plusieurs circuits de traitement de donnée dans le substrat, chaque circuit de traitement étant formé dans un premier caisson, et dans un second caisson isolant électriquement du substrat le premier caisson avec un caisson enterré, chaque circuit de traitement de donnée comprenant une borne de masse formée dans le premier caisson et une borne d'alimentation formée dans le second caisson, et de formation d'un circuit de détection pour chaque circuit de traitement, chaque circuit de détection fournissant un signal de détection actif lorsqu'une différence de tension entre la borne de masse du circuit de traitement et la borne de masse du substrat, ou entre la borne d'alimentation du circuit de traitement et la tension régulée, franchit une tension de seuil.

Selon un mode de réalisation, le procédé comprend une étape de formation pour chaque circuit de traitement d'un circuit de polarisation fournissant une tension de polarisation à la borne de masse du circuit de traitement.

Selon un mode de réalisation, le procédé comprend une étape de fourniture d'un signal de détection consolidé actif si l'un au moins des signaux de détection est actif.

Des modes de réalisation concernent également un microcircuit formé dans un substrat et comprenant un circuit de traitement de donnée formé dans un premier et un second caisson, le circuit de traitement comportant des bornes d'alimentation et de masse, la borne de masse étant formée dans le premier caisson qui est électriquement isolé du substrat par le second caisson et un caisson enterré. Selon un mode de réalisation, le microcircuit est configuré pour mettre en oeuvre le procédé tel que défini précédemment.

Selon un mode de réalisation, la borne de masse du circuit de traitement est reliée à la borne de masse du substrat par l'intermédiaire d'une résistance ou d'un circuit de polarisation fournissant une tension de polarisation à la borne de masse du circuit de traitement.

Selon un mode de réalisation, le microcircuit comprend plusieurs circuits de traitement de donnée comportant chacun des bornes d'alimentation et de masse, chacune des bornes de masse étant formée dans un caisson isolé, chaque circuit de traitement étant associé à un circuit de détection fournissant un signal de détection actif lorsqu'une différence de tension entre la borne de masse du circuit de traitement et la borne de masse du substrat, ou enter la borne d'alimentation du circuit de traitement et la tension régulée, franchit une tension de seuil.

Selon un mode de réalisation, le microcircuit comprend un circuit logique LG recevant tous les signaux de détection, et fournissant un signal de détection consolidé actif si l'un au moins des signaux de détection est actif.

Selon un mode de réalisation, le microcircuit comprend pour chaque circuit de traitement un circuit de polarisation fournissant une tension de polarisation à la borne de masse du circuit de traitement.

Des modes de réalisation concernent également un dispositif portable à microcircuit, comprenant un microcircuit tel que défini précédemment.

Des exemples de réalisation de l'invention seront décrits dans ce qui suit, à titre non limitatif en relation avec les figures jointes parmi lesquelles :

la figure 1 représente schématiquement en coupe transversale un substrat dans lequel est formé un circuit intégré,

la figure 2 représente sur une échelle différents niveaux de tension à considérer dans une analyse du fonctionnement du circuit intégré,

les figures 3A et 3B sont des courbes de variation en fonction du temps, de tensions dans le circuit intégré lorsqu'il est soumis à un éclair bref,

la figure 4 est une vue de dessus schématique du circuit intégré, selon un mode de réalisation,

la figure 5 représente schématiquement un circuit d'alimentation du circuit intégré,

la figure 6 représente schématiquement un circuit de polarisation d'une masse locale d'un circuit du circuit intégré,

la figure 7 représente un circuit de détection d'injection de faute, selon un mode de réalisation,

la figure 8 représente un circuit de détection d'injection de faute, selon un autre mode de réalisation,

la figure 9 représente une bascule du circuit de détection de la figure 8 ou 9.

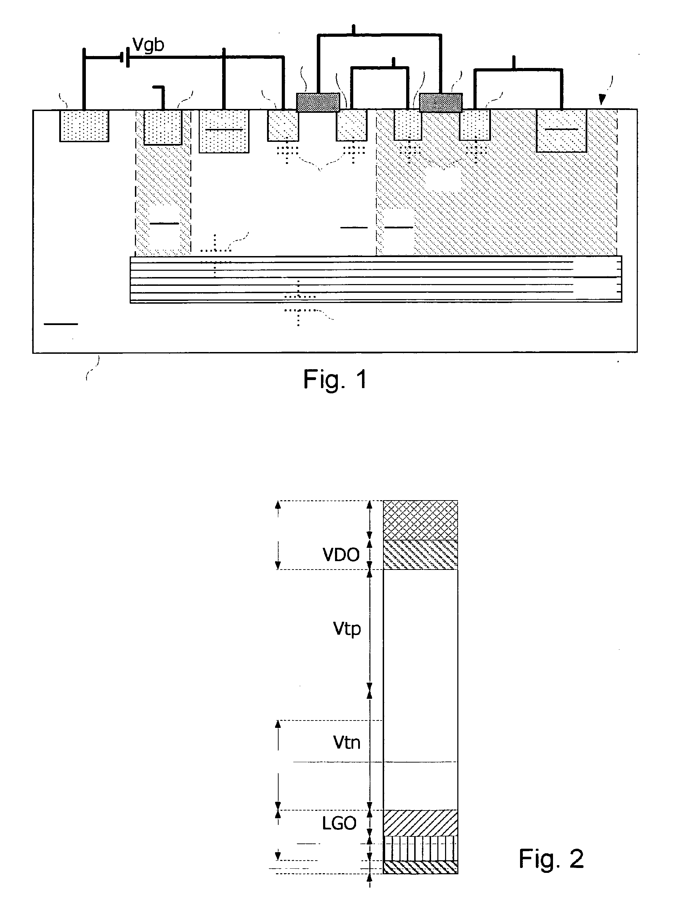

La figure 1 représente un circuit intégré IC comprenant un substrat SUB dans un matériau semi-conducteur de type de conductivité P dans lequel est formé un circuit ISC. Le substrat SUB comprend une région dopée P+ SBS formant une prise de substrat connectée à une masse de substrat SGnd. Le circuit ISC comprend un caisson enterré NISO de type de conductivité N et un caisson NW de type de conductivité N formé dans le substrat jusqu'à atteindre le caisson NISO. Le caisson NW est formé de manière à entourer une zone du substrat formant ainsi un caisson PW de type de conductivité P. Le caisson PW se trouve ainsi isolé du substrat SUB par les caissons NISO et NW. Le caisson NISO forme avec le caisson PW une capacité CIW, et avec le substrat SUB une capacité CIS. La présence des capacités CIW, CIS permet de réduire le bruit sur la masse SGnd du substrat SUB et le rayonnement électromagnétique émis par le circuit, notamment dans la bande de 800 MHz à 1 GHz.

Le caisson NW comprend des régions dopées N+ NS1, NS2 formant des prises de caisson destinées à recevoir la tension d'alimentation Vdd du circuit. Le caisson NW comprend également des régions DP, SP dopées P+ formant le drain et la source d'un transistor CMOS à canal P comprenant une grille GP formée au dessus d'une zone formant le canal du transistor, entre les régions de source SP et de drain DP. Le caisson PW comprend une région dopée P+ PWS formant une prise de caisson destinée à être connectée à la masse et deux régions SN, DN dopées N+ formant la source et le drain d'un transistor CMOS à canal N comprenant une grille GN formée au dessus d'une zone entre les régions de source SN et de drain DN. Les zones entre une région dopée P+ et une région dopée N+ comprennent une tranchée remplie d'un matériau isolant (non représenté), formée dans le substrat pour isoler les régions dopées P+ des régions dopées N+. Les régions de drain DN, DP et de source SN, SP des transistors, forment avec les caissons NW et PW des capacités CPN, CNP. Dans l'exemple de la figure 1, les transistors à canal N et P sont interconnectés de manière à former un inverseur. Ainsi, la source SP reçoit la tension d'alimentation Vdd, et la source SN est connectée à la prise de masse PWS. Une entrée In de l'inverseur est connectée aux grilles SN et SP, et une sortie Out de l'inverseur est connectée aux drains DN, DP.

La prise de masse PWS du caisson PW forme une masse locale LGnd du circuit ISC qui peut être connectée à la masse du substrat SGnd, ou recevoir une tension de polarisation par rapport à celle-ci.

La figure 2 représente sur une échelle différents valeurs et plages de tension à considérer dans le fonctionnement du circuit intégré IC. L'échelle de la figure 2 comprend, en partant du sommet de l'échelle, des plages de tension GB, VDO, LGO, LGR puis SGO tout en bas de l'échelle. La plage de tension GB délimite les variations de la tension d'alimentation Vdd résultant de variations des performances du circuit intégré liées à des variations de la température ambiante et à des variations des conditions de fabrication du circuit intégré. La plage de tension VDO délimite les variations de la tension Vdd en fonction de l'ampleur de l'activité du circuit intégré. La plage VDO correspond à la chute de la tension Vdd dans les résistances internes du circuit intégré. La plage LGO délimite les variations de la tension de polarisation de la masse locale du circuit ISC en fonction de l'ampleur de l'activité du circuit intégré IC. La plage LGR délimite l'étendue maximum d'ajustement de la tension Vgb de la masse locale du circuit ISC. La plage SGO délimite les variations de la tension de la masse du substrat SUB en fonction de l'ampleur de l'activité du circuit intégré IC.

L'étendue de la plage LGR peut être choisie de manière à ce que l'écart de tension entre les plages VDO et LGO soit supérieure ou égale à la somme des tensions minimum permettant d'assurer la commutation des transistors à canal n et à canal p du circuit intégré IC, soit la somme des tensions seuil Vtn d'un transistor à canal n et Vtp d'un transistor à canal p, auxquelles on ajoute une marge (overdrive) de 10% environ.

L'étendue maximum de la plage d'ajustement de la tension Vgb de la masse locale LGnd peut être choisie de manière à prendre en compte différentes tensions relatives au fonctionnement et aux caractéristiques du circuit intégré IC. Ainsi, l'étendue maximum de la plage d'ajustement de la tension Vgb peut être choisie de manière à être compatible avec les tensions de seuil d'un transistor à canal n et d'un transistor à canal p du circuit intégré IC, avec la tension d'alimentation Vdd et avec les chutes de tension qui se produisent dans les circuits du circuit intégré lorsque ceux-ci sont actifs. Les tensions prises en compte sont considérées avec une marge d'erreur liée à des variations de performances du circuit intégré résultant de variations de la température ambiante ou de dérives des conditions de fabrication du circuit intégré.

Dans la technologie d'intégration à 90 nm, la tension d'alimentation nominale est de 1,3 V environ (à 10% près). En haut de l'échelle de la figure 2, les plages GB et VDO s'étendent sur environ 70 mV et 50 mV. Les tensions de seuil Vtp et Vtn sont en moyenne de 500 mV et 475 mV. Une plage de tension s'étendant sur environ 1025 mV doit donc être prévue pour permettre la commutation des transistors à canal n et p du circuit ISC. Les plages LGO et SGO s'étendent sur 50 mV et 25 mV. Il reste donc environ 50 mV (à 10% près) pour la plage LGR d'ajustement de la tension Vgb. Dans la technologie d'intégration à 0.18 $\mu$m, la plage d'ajustement de la tension Vgb peut voir une étendue de 100 à 200 mV.

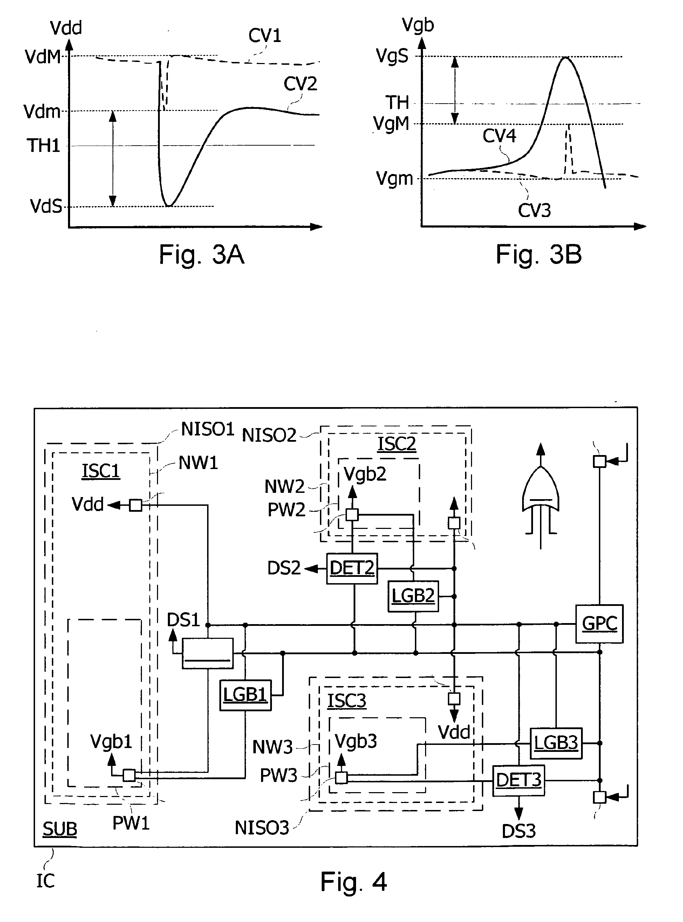

Les figures 3A, 3B représentent des courbes de variation en fonction du temps de la tension d'alimentation Vdd (courbes CV1, CV2) et de la tension Vgb de la masse locale LGnd (courbes CV3, CV4). En fonctionnement normal, la tension Vdd (courbe CV1) varie entre une valeur maximum lorsque le circuit ISC est inactif et une valeur minimum Vdm. La zone de tensions entre les tensions Vdm et VdM correspond à la plage VDO sur la figure 2. En fonctionnement normal, la tension Vgb (courbe CV3) varie entre une valeur minimum Vgm lorsque le circuit ISC est inactif et une valeur maximum VgM lorsque le circuit est actif. La zone de tensions entre les tensions Vgm et VgM correspond à la plage LGO sur la figure 2.

En cas de surtension par exemple provoquée par un flash lumineux tel qu'un tir laser sur le circuit ISC ou par un pic de tension appliqué sur une plage de contact du circuit, un fort courant apparaît entre la source d'alimentation Vdd et la masse locale LGnd du circuit ISC. Ce fort courant résulte du fait que des transistors bipolaires parasites ont tendance à amorcer un déclenchement parasite (latch-up). En revanche la présence du caisson enterré NISO minimise l'effet d'autres transistors bipolaires parasites, empêchant un fort courant de s'établir entre la masse locale LGnd du circuit ISC et la masse du substrat SGnd. Par conséquent, peu de courant passe entre la source d'alimentation Vdd et la masse de substrat SGnd. Les courbes CV2 et CV4 représentent l'effet de ce fort courant sur les tensions d'alimentation Vdd et de masse locale Vgb. Sur la courbe CV2, la tension Vdd marque une chute importante jusqu'à une tension VdS (plus de deux fois la largeur de la plage VDO). Sur la courbe CV4, la tension Vgb augmente rapidement jusqu'à atteindre un pic de tension VgS relativement élevé (plus de deux fois la largeur de la plage LGO).

La figure 4 représente le circuit intégré IC selon un mode de réalisation. Sur la figure 4, le circuit intégré IC comprend plusieurs circuits formés dans le substrat SUB, dont plusieurs circuits ISC1, ISC2, ISC3 à protéger par un dispositif de contremesure. Le circuit intégré IC comprend un circuit d'alimentation général GPC fournissant aux différents circuits du circuit intégré, dont les circuits ISC1, ISC2, ISC3, la tension d'alimentation Vdd par rapport à la masse du substrat SGnd, à partir d'une tension d'alimentation externe Vps.

Selon un mode de réalisation, chacun des circuits ISC1, ISC2, ISC3 comprend un caisson de type de conductivité P PW1, PW2, PW3 entouré d'un caisson de type de conductivité N NW1, NW2, NW3, et isolé du reste du substrat SUB par un caisson isolant enterré NISO1, NIS02, NIS03. Chacun des circuits ISC1, ISC2, ISC3 comprend une prise de masse locale LG1, LG2, LG3 et peut être associé à un circuit de polarisation LGB1, LGB2, LGB3 fournissant une tension Vgb1, Vgb2, Vgb3 de la masse locale LG1, LG2, LG3 par rapport à la masse du substrat SGnd. Ainsi, chaque circuit ISC1, ISC2, ISC3 peut être alimenté par une tension d'alimentation égale à Vdd - Vgb$<i>$ (i étant égal à 1, 2 ou 3). Comme chaque circuit ISC1, ISC2, ISC3 est isolé du substrat, les tensions Vgb1, Vgb2, Vgb3 peuvent être distinctes à un instant donné où les circuits ISC1, ISC2, ISC3 sont tous actifs. Les circuits LGB1, LGB2, LGB3 peuvent être constitués d'une simple résistance de quelques Ohms reliant la masse local LG1, LG2, LG3 à la masse du substrat SGnd.

Selon un mode de réalisation, chaque circuit ISC1, ISC2, ISC3 est associé à un circuit de détection DET1, DET2, DET3 pour détecter une attaque du circuit par une injection de faute et fournir un signal de détection DS1, DS2, DS3 actif en cas de détection d'une telle attaque. A cet effet, le circuit de détection est configuré pour détecter un pic de tension excédant un certain seuil TH entre les tensions VgM et VgS, dans la tension Vbg de la masse locale LGnd, ou une chute de la tension d'alimentation Vdd excédant un certain seuil TH1 entre les tensions VdS et Vdm. Dans l'exemple de la figure 4, chaque circuit de détection DET1, DET2, DET3 est connecté entre la sortie du circuit d'alimentation GPC et la masse du substrat SGnd, et est connecté à la borne de masse locale LG1, LG2, LG3 d'un des circuits ISC1, ISC2, ISC3. Le circuit intégré IC peut en outre comprendre un circuit logique LG, par exemple comprenant une porte logique OU, recevant tous les signaux de détection DS1, DS2, DS3, et fournissant un signal de détection consolidé CDS actif si l'un au moins des signaux DS1, DS2, DS3 est actif, révélant la détection d'une attaque du circuit intégré IC par injection de faute.

Les circuits DET1, DET2, DET3 permettent ainsi de détecter une injection de faute sur la totalité de la surface de substrat occupée par chacun des circuits ISC1, ISC2, ISC3, au dessus des caissons NISO1, NIS02, NISO3.

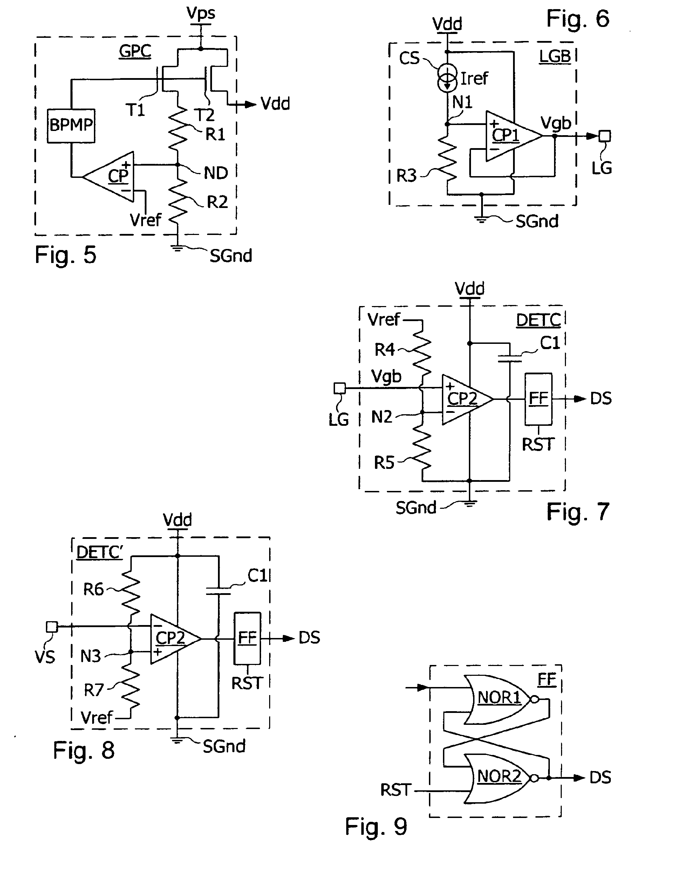

La figure 5 représente un exemple de circuit d'alimentation GPC du circuit intégré IC. Le circuit GPC comprend deux transistors MOS à canal N T1, T2, deux résistances R1, R2, un comparateur CP et un circuit élévateur de tension BPMP. Le drain des transistors T1, T2 reçoit la tension externe Vps. La source du transistor T1 est reliée à la masse du substrat SGnd par l'intermédiaire des résistances R1 et R2 connectées en série. Le noeud de jonction ND entre les résistances R1, R2 est connecté à une entrée directe du comparateur CP. Le comparateur CP comprend une entrée inverseuse recevant une tension de référence constante Vref, par exemple fixée à 0,8 V. La sortie du comparateur est connectée à une entrée du circuit BPMP. La sortie du circuit BPMP est connectée aux grilles des transistors T1, T2. La source du transistor T2 fournit la tension d'alimentation Vdd. Le circuit BPMP par exemple réalisé par une pompe de charge, fournit une tension égale à Vdd + Vtn, Vtn étant la tension de seuil des transistors T1, T2. Le comparateur CP régule la tension Vdd en maintenant la tension au noeud ND sensiblement égale à la tension Vref. La valeur de la tension Vdd est définie par les valeurs des résistances R1, R2.

La figure 6 représente un mode de réalisation de chacun des circuits de polarisation LGB1, LGB2, LGB3. Sur la figure 6, le circuit LGB comprend une résistance R3, un comparateur CP1, et une source de courant CS. La source de courant CS est alimentée par la tension Vdd et fournit un courant Iref égal à une tension de référence Vref divisée par une résistance (non représentée). La tension Vref est sensiblement constante, c'est-à-dire notamment indépendante de la température ambiante du circuit intégré IC et des conditions de fabrication de ce dernier. La tension Vref peut être par exemple fournie par un circuit de référence de bande interdite (bandgap référence circuit). Le comparateur CP1 est alimenté entre la tension d'alimentation Vdd et la masse du substrat SGnd. La résistance R3 est connectée en série entre la source de courant CS et la masse. Le noeud de jonction N1 entre la source de courant et la résistance R3 est connecté à une entrée directe du comparateur CP1. La sortie du comparateur CP1, qui fournit la tension Vgb à une borne de masse LG (borne LG1, LG2, LG3 du circuit ISC1, ISC2, ISC3), est rebouclée sur son entrée inverseuse. Ainsi, le comparateur CP1 régule la tension Vgb en la maintenant égale à la tension au noeud N1. La tension Vgb fournie par le circuit LGB peut donc être calculée à l'aide de l'équation suivante :

$$Vgb = R3\ Iref = Vref\ R3/R \qquad\qquad (1)$$

R étant une résistance telle que Vref = Iref R. Le circuit LGB présente l'avantage de ne pas être sensible à des variations de la tension d'alimentation Vdd qui peuvent se produire notamment lorsque le circuit intégré IC est actif en raison de chutes de tension dans les résistances internes du circuit IC et en cas d'attaque par injection de faute.

La résistance R3 peut être ajustable pour ajuster la tension de masse locale Vgb. Dans la technologie à 90 nm avec la tension d'alimentation Vdd fixée à 1,3 V, et si Vref est fixé à 0,1 V et si Vgb est ajustable entre 1 mV et 50 mV, alors le rapport R3/R des valeurs des résistances R3 et R est ajustable entre 1/100 et 1/2. Classiquement, la résistance ajustable R3 peut être réalisée à l'aide de plusieurs résistances connectées en série, un interrupteur étant monté en parallèle de chaque résistance montée en série, chaque interrupteur étant commandé par un bit d'un mot de commande.

Un mode de réalisation d'un circuit de détection est représenté sur la figure 7. Sur la figure 7, le circuit de détection DETC comprend deux résistances R4, R5, un condensateur C1, un comparateur CP2 et une bascule FF. Le comparateur CP2 est alimenté entre la tension d'alimentation Vdd et la masse du substrat SGnd. Le condensateur C1 est connecté entre la source de tension Vdd et la masse SGnd pour filtrer ou atténuer les éventuelles variations de la tension Vdd. Une entrée directe du comparateur CP2 est connectée à la borne de masse LG (borne LG1, LG2, LG3 du circuit ISC1, ISC2, ISC3). Les résistances R4, R5 sont connectées en série entre une source de tension de référence Vref et la masse du substrat SGnd. Le noeud de jonction N2 entre les deux résistances R4, R5 est connecté à une entrée inverseuse du comparateur CP2. La sortie du comparateur CP2 est connectée à une entrée de la bascule FF qui fournit en sortie un signal de détection DS. La bascule FF est par exemple de type RS pour fournir un signal logique à 0 tant que le signal de sortie du comparateur est à 0 et un signal logique à 1 dès qu'un signal non nul apparaît en sortie du comparateur CP2. L'état de la bascule FF peut être réinitialisé à 0 à l'aide d'un signal d'initialisation RST fourni à une entrée d'initialisation de la bascule. Le condensateur C1 présente une capacité suffisante pour maintenir la tension Vdd en cas de chute de tension le temps nécessaire à la détection.

Le circuit DETC fournit un signal logique DS signalant une attaque (par exemple à 1) dès qu'apparait une différence de tension entre la tension de la masse locale Vgb et la masse du substrat SGnd, supérieure à une tension de seuil TH. La tension de seuil TH est définie par les résistances R4, R5 et la tension de référence Vref. Ainsi, la tension de seuil TH peut être déterminée à l'aide de la formule suivante :

$$TH = Vref\ /\ (1 + R4/R5) \qquad\qquad (2)$$

Les résistances R4 et R5 peuvent être choisies de manière à ce que la tension de seuil TH soit aussi faible que possible au dessus de la tension VgM ou de la plage LGO (figures 3B et 2) pour obtenir une grande sensibilité de détection tout en évitant le risque de fausse détection. L'une des deux résistances R4, R5, par exemple la résistance R5 peut être ajustable pour ajuster la tension de seuil TH en fonction de la tension de masse locale Vgb fournie par le circuit de polarisation LGB pour obtenir une certaine sensibilité de détection. Les figures 2 et 3B indiquent une plage d'ajustement de la tension de seuil TH située au dessus de la plage LGO d'ajustement de la tension Vgb et entre les tensions VgM et VgS. La figure 3B montre qu'un compromis est à trouver pour le seuil TH1, sachant qu'en augmentant la sensibilité de détection, on augmente le risque de fausse détection.

Lorsque le signal DS signale une attaque, toute mesure appropriée peut être prise, compte tenu qu'un signalement d'erreur peut révéler une attaque du circuit intégré IC. Ainsi, le circuit intégré peut, en cas de détection d'erreur, par exemple se réinitialiser, se bloquer définitivement, effacer sa mémoire ou seulement les données sensibles qu'il mémorise, etc.

La figure 8 représente un circuit de détection DETC' selon un autre mode de réalisation. Sur la figure 8, le circuit DETC' diffère du circuit DETC en ce qu'il est configuré pour se connecter non pas à la borne de masse locale du circuit ISC1, ISC2, ISC3, mais à la borne d'alimentation VS (correspondant à VS1, VS2 ou VS3 sur la figure 4) de celui-ci. Le circuit DETC' diffère du circuit DETC en ce que l'entrée inverseuse du comparateur CP2 est connectée à la borne VS et la source de tension d'alimentation Vdd est reliée à la source de tension Vref par l'intermédiaire de résistances R6 et R7 connectées en série. Le noeud de jonction N3 entre les résistances R6, R7 est connecté à l'entrée directe du comparateur CP2.

Le circuit DETC' fournit un signal logique DS signalant une attaque (par exemple à 1) dès qu'apparait une différence de tension entre la tension d'alimentation à la borne VS et la tension d'alimentation Vdd en sortie du circuit GPC, inférieure à une tension de seuil TH1. La tension de seuil TH1 est définie par les résistances R6, R7 et des tensions Vdd et Vref. Ainsi, la tension de seuil TH1 peut être calculée à l'aide de la formule suivante :

$$TH1 = Vref + (Vdd - Vref) / (1 + R6/R7) \qquad (3)$$

Les résistances R6 et R7 peuvent être choisies de manière à ce que la tension de seuil TH1 soit aussi grande que possible en dessous de la tension Vdm ou de la plage VDO (figures 3A et 2) pour obtenir une grande sensibilité de détection tout en évitant le risque de fausse détection. L'une des deux résistances R6, R7, par exemple la résistance R7 peut être ajustable pour ajuster la tension de seuil TH1 en fonction de la tension d'alimentation Vdd fournie par le circuit d'alimentation GPC pour obtenir une certaine sensibilité de détection. La figure 3B indique une plage d'ajustement de la tension de seuil TH1 située entre les tensions VdS et Vdm. La figure 3B montre qu'un compromis est à trouver pour le seuil TH1, sachant qu'en augmentant la sensibilité de détection, on augmente le risque de fausse détection.

La figure 9 représente un exemple classique de réalisation de la bascule FF. La bascule FF comprend deux portes logiques NOR1, NOR2 de type NON OU. La sortie de chaque porte NOR1, NOR2 est connectée à une entrée de l'autre porte. La porte NOR1 comprend une entrée connectée à une entrée de la bascule FF (connectée à la sortie du comparateur CP2) et la porte NOR2 comprend une entrée recevant un signal d'initialisation RST de la bascule. La sortie de la porte NOR2 est connectée à la sortie de la bascule.

Il apparaîtra clairement à l'homme de l'art que la présente invention est susceptible de diverses variantes de réalisation et diverses applications. En particulier, l'invention n'est pas limitée à un circuit intégré comportant plusieurs caissons isolés du substrat. L'ensemble des circuits de traitement du circuit intégré peuvent être formés dans un seul caisson isolé et un seul caisson entourant le caisson isolé.

L'invention n'est pas non plus limitée aux circuits décrits de détection d'une attaque par flash lumineux ou pics de tensions appliqués sur des plages de contact du circuit intégré. Tout autre circuit permettant de détecter un pic de tension franchissant une tension de seuil dans la tension d'alimentation ou dans la tension de masse (isolée du substrat) d'un circuit de traitement du circuit intégré peut convenir.

## Revendications

**1.** Procédé de détection d'une attaque d'un microcircuit électronique (IC, IC1), comprenant des étapes consistant à :

former le microcircuit (IC) dans un substrat (SUB),
former dans le substrat un premier caisson (PW, PW1) électriquement isolé du substrat, par un second caisson (NW, NW1) et un caisson enterré (NISO, NISO1), et
former dans les premier et second caissons un circuit de traitement de donnée (ISC, ISC1) comprenant une borne de masse (LG1) formée dans le premier caisson et une borne d'alimentation (VS, VS1) formée dans le second caisson,

**caractérisé en ce qu'**il comprend des étapes consistant à :

fournir à la borne de masse (LGnd, LG1) du circuit de traitement (ISC, ISC1) une tension (Vgb) supérieure à une tension fournie à une borne de masse (SGnd) du substrat,
fournir à la borne d'alimentation du circuit de traitement une tension d'alimentation régulée (Vdd) à partir d'une tension d'alimentation reçue à une borne d'alimentation (Vps) du microcircuit, et
activer un signal de détection (DS, DS1) lorsqu'une différence de tension entre la borne de masse du circuit de traitement et la borne de masse du substrat, ou entre la borne d'alimentation (VS, VS1) du circuit de traitement et la tension régulée, franchit une tension de seuil (TH, TH1).

**2.** Procédé selon la revendication 1, dans lequel le signal de détection (DS, DS1) est activé dès que la tension entre les bornes de masse (LGnd, LG1, SGnd) du circuit de traitement (ISC, ISC1) et du substrat (SUB) devient supérieure à la tension de seuil (TH).

**3.** Procédé selon la revendication 2, dans lequel la tension de seuil (TH) est ajustée à une valeur supérieure à une plage (VDO) de variation de la tension de masse (Vgb) à la borne de masse (LGnd, LG1) du circuit de traitement (ISC, ISC1) en fonctionnement normal.

4. Procédé selon la revendication 1, dans lequel le signal de détection (DS, DS1) est activé dès que la différence de tension entre la borne d'alimentation (VS, VS1) du circuit de traitement (ISC, ISC1) et la tension régulée (Vdd) devient inférieure à la tension de seuil (TH1).

5. Procédé selon la revendication 4, dans lequel la tension de seuil (TH1) est ajustée à une valeur inférieure à une plage (VDO) de variation de la tension à la borne d'alimentation (VS, VS1) du circuit de traitement (ISC, ISC1) en fonctionnement normal.

6. Procédé selon l'une des revendications 1 à 5, dans lequel la borne de masse (LGnd, LG1) du circuit de traitement (ISC, ISC1) est reliée à la borne de masse du substrat (SGnd) par l'intermédiaire d'une résistance ou d'un circuit de polarisation (LGB, LGB1) fournissant une tension de polarisation (Vgb) à la borne de masse du circuit de traitement.

7. Procédé selon l'une des revendications 1 à 6, comprenant des étapes de formation de plusieurs circuits de traitement de donnée (ISC1, ISC2, ISC3) dans le substrat (SUB), chaque circuit de traitement étant formé dans un premier caisson (PW1, PW2, PW3), et dans un second caisson (NW1, NW2, NW3) isolant électriquement du substrat le premier caisson avec un caisson enterré (NISO1, NISO2, NISO3), chaque circuit de traitement comprenant une borne de masse (LG1, LG2, LG3) formée dans le premier caisson et une borne d'alimentation (VS1, VS2, VS3) formée dans le second caisson, et de formation d'un circuit de détection (DET1, DET2, DET3) pour chaque circuit de traitement, chaque circuit de détection fournissant un signal de détection (DS1, DS2, DS3) actif lorsqu'une différence de tension entre la borne de masse (LG1, LG2, LG3) du circuit de traitement et la borne de masse (SGnd) du substrat, ou entre la borne d'alimentation (VS1, VS2, VS3) du circuit de traitement et la tension régulée (Vdd), franchit une tension de seuil (TH, TH1).

8. Procédé selon la revendication 7, comprenant une étape de formation pour chaque circuit de traitement (ISC1, ISC2, ISC3) d'un circuit de polarisation fournissant une tension de polarisation (Vgb1, Vgb2, Vgb3) à la borne de masse (LG1, LG2, LG3) du circuit de traitement.

9. Procédé selon la revendication 7 ou 8, comprenant une étape de fourniture d'un signal de détection consolidé (CDS) actif si l'un au moins des signaux de détection (DS1, DS2, DS3) est actif.

10. Microcircuit formé dans un substrat et comprenant un circuit de traitement de donnée (ISC, ISC1) formé dans un premier et un second caisson, le circuit de traitement comportant des bornes d'alimentation (VS1) et de masse (LG1), la borne de masse étant formée dans le premier caisson (PW, PW1) qui est électriquement isolé du substrat par le second caisson (NW, NW1) et un caisson enterré (NISO, NISO1),
**caractérisé en ce que** le microcircuit est configuré pour mettre en oeuvre le procédé selon l'une des revendications 1 à 9.

11. Microcircuit selon la revendication 10, dans lequel la borne de masse (LGnd, LG1) du circuit de traitement (ISC, ISC1) est reliée à la borne de masse du substrat (SGnd) par l'intermédiaire d'une résistance ou d'un circuit de polarisation (LGB, LGB1) fournissant une tension de polarisation (Vgb) à la borne de masse du circuit de traitement.

12. Microcircuit selon la revendication 11, comprenant plusieurs circuits de traitement de données (ISC1, ISC2, ISC3) comportant chacun des bornes d'alimentation (VS1, VS2, VS3) et de masse (LG1, LG2, LG3), chacune des bornes de masse étant formée dans un caisson isolé (PW1, PW2, PW3), chaque circuit de traitement étant associé à un circuit de détection (DET1, DET2, DET3) fournissant un signal de détection (DS1, DS2, DS3) actif lorsqu'une différence de tension entre la borne de masse du circuit de traitement et la borne de masse du substrat (SGnd), ou entre la borne d'alimentation (VS1, VS2, VS3) du circuit de traitement et la tension régulée (Vdd), franchit une tension de seuil (TH, TH1).

13. Microcircuit selon la revendication 12, comprenant un circuit logique LG recevant tous les signaux de détection (DS1, DS2, DS3), et fournissant un signal de détection consolidé (CDS) actif si l'un au moins des signaux de détection est actif.

14. Microcircuit selon la revendication 12 ou 13, comprenant pour chaque circuit de traitement (ISC1, ISC2, ISC3) un circuit de polarisation fournissant une tension de polarisation (Vgb1, Vgb2, Vgb3) à la borne de masse (LG1, LG2, LG3) du circuit de traitement.

15. Dispositif portable à microcircuit, **caractérisé en ce qu'**il comprend un microcircuit (IC, IC2) selon l'une des revendications 10 à 14.


**Patentansprüche**

1. Verfahren zur Erfassung eines Angriffs auf eine elektronische Mikroschaltung (IC, IC1), das Schritte enthält, die darin bestehen:

   die Mikroschaltung (IC) in einem Substrat (SUB) zu formen,
   im Substrat eine durch eine zweite Wanne (NW, NW1) und eine vergrabene Wanne (NISO, NISO1) elektrisch vom Substrat isolierte erste Wanne (PW, PW1) zu formen, und
   in der ersten und zweiten Wanne eine Datenverarbeitungsschaltung (ISC, ISC1) zu formen, die eine in der ersten Wanne geformte Masseklemme (LG1) und eine in der zweiten Wanne geformte Versorgungsklemme (VS, VS1) enthält,
   **dadurch gekennzeichnet, dass** es die Schritte enthält, die darin bestehen:

   an die Masseklemme (LGnd, LG1) der Verarbeitungsschaltung (ISC, ISC1) eine Spannung (Vgb) zu liefern, die höher ist als eine an eine Masseklemme (SGnd) des Substrats gelieferte Spannung,
   an die Versorgungsklemme der Verarbeitungsschaltung eine regulierte Versorgungsspannung (Vdd) ausgehend von einer an einer Versorgungsklemme (Vps) der Mikroschaltung empfangenen Versorgungsspannung zu liefern, und
   ein Erfassungssignal (DS, DS1) zu aktivieren, wenn eine Spannungsdifferenz zwischen der Masseklemme der Verarbeitungsschaltung und der Masseklemme des Substrats oder zwischen der Versorgungsklemme (VS, VS1) der Verarbeitungsschaltung und der regulierten Spannung eine Schwellenspannung (TH, TH1) überschreitet.

2. Verfahren nach Anspruch 1, wobei das Erfassungssignal (DS, DS1) aktiviert wird, sobald die Spannung zwischen den Masseklemmen (LGnd, LG1, SGnd) der Verarbeitungsschaltung (ISC, ISC1) und des Substrats (SUB) höher wird als die Schwellenspannung (TH).

3. Verfahren nach Anspruch 2, wobei die Schwellenspannung (TH) auf einen Wert eingestellt wird, der höher ist als ein Änderungsbereich (VDO) der Massespannung (Vgb) an der Masseklemme (LGnd, LG1) der Verarbeitungsschaltung (ISC, ISC1) bei Normalbetrieb.

4. Verfahren nach Anspruch 1, wobei das Erfassungssignal (DS, DS1) aktiviert wird, sobald die Spannungsdifferenz zwischen der Versorgungsklemme (VS, VS1) der Verarbeitungsschaltung (ISC, ISC1) und der regulierten Spannung (Vdd) niedriger wird als die Schwellenspannung (TH1).

5. Verfahren nach Anspruch 4, wobei die Schwellenspannung (TH1) auf einen Wert eingestellt wird, der niedriger ist als ein Änderungsbereich (VDO) der Spannung an der Versorgungsklemme (VS, VS1) der Verarbeitungsschaltung (ISC, ISC1) bei Normalbetrieb.

6. Verfahren nach einem der Ansprüche 1 bis 5, wobei die Masseklemme (LGnd, LG1) der Verarbeitungsschaltung (ISC, ISC1) mit der Masseklemme des Substrats (SGnd) über einen Widerstand oder eine Vorspannungsschaltung (LGB, LGB1) verbunden ist, die eine Vorspannung (Vgb) an die Masseklemme der Verarbeitungsschaltung liefert.

7. Verfahren nach einem der Ansprüche 1 bis 6, das Schritte des Formens mehrerer Datenverarbeitungsschaltungen (ISC1, ISC2, ISC3) im Substrat (SUB), wobei jede Verarbeitungsschaltung in einer ersten Wanne (PW1, PW2, PW3) und in einer zweiten Wanne (NW1, NW2, NW3) geformt wird, die die erste Wanne mit einer vergrabenen Wanne (NTSO1, NIS02, NIS03) vom Substrat elektrisch isoliert, wobei jede Verarbeitungsschaltung eine in der ersten Wanne geformte Masseklemme (LG1, LG2, LG3) und eine in der zweiten Wanne geformte Versorgungsklemme (VS1, VS2, VS3) enthält, und des Formens einer Erfassungsschaltung (DET1, DET2, DET3) für jede Verarbeitungsschaltung enthält, wobei jede Erfassungsschaltung ein Erfassungssignal (DS1, DS2, DS3) liefert, das aktiv ist, wenn eine Spannungsdifferenz zwischen der Masseklemme (LG1, LG2, LG3) der Verarbeitungsschaltung und der Masseklemme (SGnd) des Substrats oder zwischen der Versorgungsklemme (VS1, VS2, VS3) der Verarbeitungsschaltung und der regulierten Spannung (Vdd) eine Schwellenspannung (TH, TH1) überschreitet.

8. Verfahren nach Anspruch 7, das einen Schritt des Formens einer Vorspannungsschaltung für jede Verarbeitungsschaltung (ISC1, ISC2, ISC3) enthält, die eine Vorspannung (Vgb1, Vgb2, Vgb3) an die Masseklemme (LG1, LG2, LG3) der Verarbeitungsschaltung liefert.

9. Verfahren nach Anspruch 7 oder 8, das einen Schritt des Lieferns eines konsolidierten Erfassungssignals (CDS) enthält, das aktiv ist, wenn mindestens eines der Erfassungssignale (DS1, DS2, DS3) aktiv ist.

10. Mikroschaltung, die in einem Substrat geformt ist und eine Datenverarbeitungsschaltung (ISC, ISC1) enthält, die in einer ersten und einer zweiten Wanne geformt ist, wobei die Verarbeitungsschaltung eine Versorgungsklemme (VS1) und eine Masseklemme (LG1) aufweist, wobei die Masseklemme in der ersten Wanne (PW, PW1) geformt ist, die vom Substrat durch die zweite Wanne (NW, NW1) und eine vergrabene Wanne (NISO, NISO1) elektrisch isoliert ist, **dadurch gekennzeichnet, dass** die Mikroschaltung konfiguriert ist, das Verfahren nach einem der Ansprüche 1 bis 9 durchzuführen.

11. Mikroschaltung nach Anspruch 10, wobei die Masseklemme (LGnd, LG1) der Verarbeitungsschaltung (ISC, ISC1) mit der Masseklemme des Substrats (SGnd) über einen Widerstand oder eine Vorspannungsschaltung (LGB, LGB1) verbunden ist, die eine Vorspannung (Vgb) an die Masseklemme der Verarbeitungsschaltung liefert.

12. Mikroschaltung nach Anspruch 11, die mehrere Datenverarbeitungsschaltungen (ISC1, ISC2, ISC3) enthält, die je Versorgungsklemmen (VS1, VS2, VS3) und Masseklemmen (LG1, LG2, LG3) aufweisen, wobei jede der Masseklemmen in einer isolierten Wanne (PW1, PW2, PW3) geformt ist, wobei jede Verarbeitungsschaltung einer Erfassungsschaltung (DET1, DET2, DET3) zugeordnet ist, die ein Erfassungssignal (DS1, DS2, DS3) liefert, das aktiv ist, wenn eine Spannungsdifferenz zwischen der Masseklemme der Verarbeitungsschaltung und der Masseklemme des Substrats (SGnd) oder zwischen der Versorgungsklemme (VS1, VS2, VS3) der Verarbeitungsschaltung und der regulierten Spannung (Vdd) eine Schwellenspannung (TH, TH1) überschreitet.

13. Mikroschaltung nach Anspruch 12, die eine Logikschaltung LG enthält, die alle Erfassungssignale (DS1, DS2, DS3) empfängt und ein konsolidiertes Erfassungssignal (CDS) liefert, das aktiv ist, wenn mindestens eines der Erfassungssignale aktiv ist.

14. Mikroschaltung nach Anspruch 12 oder 13, die für jede Verarbeitungsschaltung (ISC1, ISC2, ISC3) eine Vorspannungsschaltung enthält, die eine Vorspannung (Vgb1, Vgb2, Vgb3) an die Masseklemme (LG1, LG2, LG3) der Verarbeitungsschaltung liefert.

15. Tragbare Vorrichtung mit Mikroschaltung, **dadurch gekennzeichnet, dass** sie eine Mikroschaltung (IC, IC2) nach einem der Ansprüche 10 bis 14 enthält.

**Claims**

1. Method for detecting an attack of an electronic microcircuit (IC, IC1), comprising steps consisting in:

forming the microcircuit (IC) in a substrate (SUB),
forming in the substrate a first well (PW, PW1) electrically insulated from the substrate, by a second well (NW, NW1) and a buried well (NISO, NIS01), and
forming in the first and second wells a data processing circuit (ISC, ISC1) comprising a ground terminal (LG1) formed in the first well and a supply terminal (VS, VS1) formed in the second well,
**characterized in that** it comprises steps consisting in:

providing at the ground terminal (LGnd, LG1) of the processing circuit (ISC, ISC1) a voltage (Vgb) greater than a voltage provided at a ground terminal (SGnd) of the substrate,
providing at the supply terminal of the processing circuit a regulated supply voltage (Vdd) on the basis of a supply voltage received at a supply terminal (Vps) of the microcircuit, and
activating a detection signal (DS, DS1) when a voltage difference between the ground terminal of the processing circuit and the ground terminal of the substrate, or between the supply terminal (VS, VS1) of the processing circuit and the regulated voltage, crosses a threshold voltage (TH, TH1).

2. Method according to Claim 1, in which the detection signal (DS, DS1) is activated as soon as the voltage between the ground terminals (LGnd, LG1, SGnd) of the processing circuit (ISC, ISC1) and of the substrate (SUB) becomes greater than the threshold voltage (TH).

3. Method according to Claim 2, in which the threshold voltage (TH) is set to a value greater than a span (VDO) of variation of the ground voltage (Vgb) at the ground terminal (LGnd, LG1) of the processing circuit (ISC, ISC1) under normal operation.

4. Method according to Claim 1, in which the detection signal (DS, DS1) is activated as soon as the voltage difference between the supply terminal (VS, VS1) of the processing circuit (ISC, ISC1) and the regulated voltage (Vdd) becomes less than the threshold voltage (TH1).

5. Method according to Claim 4, in which the threshold voltage (TH1) is set to a value less than a span (VDO) of variation of the voltage at the supply terminal (VS, VS1) of the processing circuit (ISC, ISC1) under normal operation.

6. Method according to one of Claims 1 to 5, in which the ground terminal (LGnd, LG1) of the processing circuit (ISC, ISC1) is linked to the ground terminal of the substrate (SGnd) by way of a resistor or of a bias circuit (LGB, LGB1) providing a bias voltage (Vgb) at the ground terminal of the processing circuit.

7. Method according to one of Claims 1 to 6, comprising steps of forming several data processing circuits (ISC1, ISC2, ISC3) in the substrate (SUB), each processing circuit being formed in a first well (PW1, PW2, PW3), and in a second well (NW1, NW2, NW3) electrically insulating of the substrate the first well with a buried well (NISO1, NIS02, NIS03), each processing circuit comprising a ground terminal (LG1, LG2, LG3) formed in the first well and a supply terminal (VS1, VS2, VS3) formed in the second well, and of forming a detection circuit (DET1, DET2, DET3) for each processing circuit, each detection circuit providing an active detection signal (DS1, DS2, DS3) when a voltage difference between the ground terminal (LG1, LG2, LG3) of the processing circuit and the ground terminal (SGnd) of the substrate, or between the supply terminal (VS1, VS2, VS3) of the processing circuit and the regulated voltage (Vdd), crosses a threshold voltage (TH, TH1).

8. Method according to Claim 7, comprising a step of forming for each processing circuit (ISC1, ISC2, ISC3) a bias circuit providing a bias voltage (Vgb1, Vgb2, Vgb3) at the ground terminal (LG1, LG2, LG3) of the processing circuit.

9. Method according to Claim 7 or 8, comprising a step of providing an active consolidated detection signal (CDS) if at least one of the detection signals (DS1, DS2, DS3) is active.

10. Microcircuit formed in a substrate and comprising a data processing circuit (ISC, ISC1) formed in a first and a second well, the processing circuit comprising supply (VS1) and ground (LG1) terminals, the ground terminal being formed in the first well (PW, PW1) which is electrically insulated from the substrate by the second well (NW, NW1) and a buried well (NISO, NISO1),
**characterized in that** the microcircuit is configured to implement the method according to one of Claims 1 to 9.

11. Microcircuit according to Claim 10, in which the ground terminal (LGnd, LG1) of the processing circuit (ISC, ISC1) is linked to the ground terminal of the substrate (SGnd) by way of a resistor or of a bias circuit (LGB, LGB1) providing a bias voltage (Vgb) at the ground terminal of the processing circuit.

12. Microcircuit according to Claim 11, comprising several data processing circuits (ISC1, ISC2, ISC3) each comprising supply (VS1, VS2, VS3) and ground (LG1, LG2, LG3) terminals, each of the ground terminals being formed in an insulated well (PW1, PW2, PW3), each processing circuit being associated with a detection circuit (DET1, DET2, DET3) providing an active detection signal (DS1, DS2, DS3) when a voltage difference between the ground terminal of the processing circuit and the ground terminal of the substrate (SGnd), or between the supply terminal (VS1, VS2, VS3) of the processing circuit and the regulated voltage (Vdd), crosses a threshold voltage (TH, TH1).

13. Microcircuit according to Claim 12, comprising a logic circuit LG receiving all the detection signals (DS1, DS2, DS3), and providing an active consolidated detection signal (CDS) if at least one of the detection signals is active.

14. Microcircuit according to Claim 12 or 13, comprising for each processing circuit (ISC1, ISC2, ISC3) a bias circuit providing a bias voltage (Vgb1, Vgb2, Vgb3) at the ground terminal (LG1, LG2, LG3) of the processing circuit.

15. Portable device with microcircuit, **characterized in that** it comprises a microcircuit (IC, IC2) according to one of Claims 10 to 14.

Fig. 1

Fig. 2

Fig. 3A

Fig. 3B

Fig. 4

Fig. 5

Fig. 6

Fig. 7

Fig. 8

Fig. 9

**EP 2 369 622 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6745331 B
- US 2007171588 A
- EP 2109139 A